# EUROPÄISCHE PATENTSCHRIFT

(11) **EP 0 490 356 B1**
(45) Veröffentlichungstag und Bekanntmachung des Hinweises auf die Patenterteilung: **11.08.1993**
(21) Anmeldenummer: 91121213.2
(22) Anmeldetag: 11.12.1991
(51) Int. Cl.: F16B 35/04, F16B 33/02, G05D 16/20

(54) **Hohle Einstellschraube**
Hollow adjusting screw
Vis de réglage creuse

(30) Priorität: 13.12.1990 DE 9016836 U
(43) Veröffentlichungstag der Anmeldung: 17.06.1992
(73) Patentinhaber: HONEYWELL B.V., NL-1101 EA Amsterdam Z.O. (NL)
(72) Erfinder: Oosterhoff, Hendrik Egbert, NL-7827 JG Emmen (NL)
(74) Vertreter: Rentzsch, Heinz, Dipl.-Ing.

(56) Entgegenhaltungen:
- EP-A- 0 385 286
- DE-A- 3 150 656
- DE-U- 9 016 836
- GB-A- 110 998
- US-A- 1 940 878

## Beschreibung

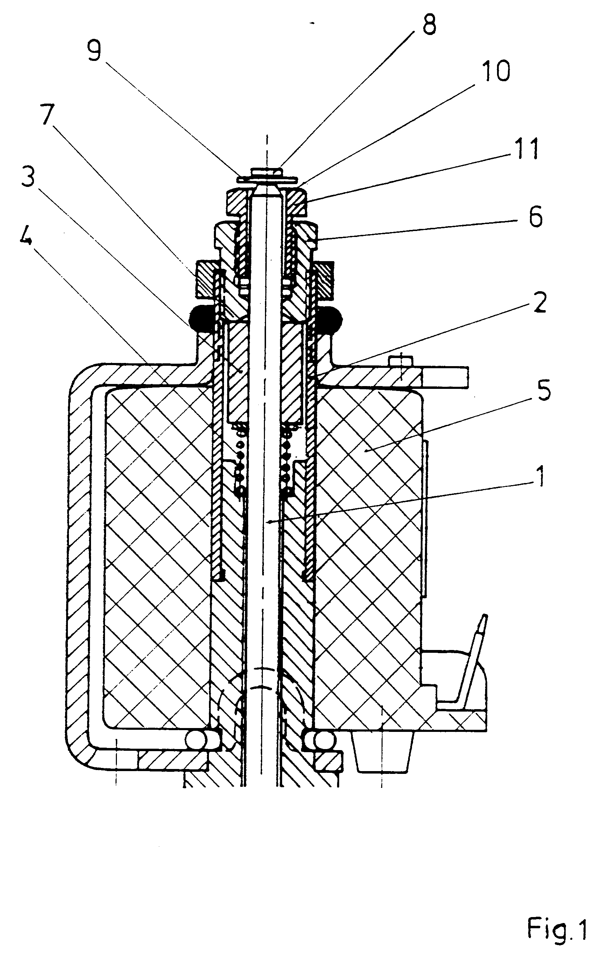

Die Erfindung bezieht sich auf eine in einem Gewinde verstellbare, hohle Einstellschraube. Das der Erfindung zugrundeliegende Problem soll zunächst anhand von Figur 1 erläutert werden, die den Magnetantrieb für einen Druckregler wiedergibt, wie er im Prinzip aus EP-C-39 000 bekannt ist. Eine Ventilstange 1 trägt an ihrem unteren, nicht wiedergegebenen Ende einen Ventilschließkörper. Auf der Ventilstange 1 sitzt ein in einer Hülse 2 verschiebarer Anker 3, der gegen die Kraft einer Feder 4 nach unten bewegt wird, sobald die Erregerspule 5 des Magnetantriebs von Strom durchflossen wird. Der Hub der Ventilstange 1 soll in beiden Richtungen einstellbar begrenzt werden. Zu diesem Zweck ist in das Rohr 2 eine Einstellbuchse 6 eingeschraubt, deren untere Stirnfläche 7 die Bewegung des Ankers 3 nach oben begrenzt. Durch Verstellen der Schraubbuchse 6 im Gewinde des Rohres 2 läßt sich die Lage dieses Anschlags 7 einstellen. Damit ist die Hubgrenze der Ventilstange 1 nach oben begrenzt. In Gegenrichtung ist am Ende 8 der Ventilstange 1 in eine Ringnut eine Sperrscheibe 9 eingesetzt, gegen die sich die obere Stirnfläche 10 einer hohlen Einstellschraube 11 legt. Auch dieser Anschlag soll einstellbar sein. Zu diesem Zweck ist die Einstellschraube 11 im Innengewinde der Buchse 6 verstellbar.

Je tiefer die Einstellschraube 11 in das Gewinde der Buchse 6 eingeschraubt ist, umso größer ist die Kraftübertragung von der Einstellschraube 11 auf die Einstellbuchse 6 und umso größer ist die Gefahr, daß beim Verstellen der Einstellschraube 11 auch die Buchse 6 mitbewegt, d.h. im Gewinde des Rohres 2 verstellt wird. Dies würde bedeuten, daß bei einer Einstellung der einen Hubgrenze zugleich die andere mitverändert wird. Dies ist höchst unerwünscht.

Aus DE-A 31 50 656 ist eine selbstsichernde Stiftschraube mit den Merkmalen des Oberbegriffs des Anspruchs 1 bekannt. Sie wird in den Kipphebel eines Ventilantriebes einer Brennkraftmaschine eingeschraubt und ist hierfür mit einem Schraubendreherschlitz versehen. Dieser bildet durch achsparallele Schlitzung zwei sich etwa über zwei Drittel der gesamten Gewindelänge erstreckende Gewindeteilstücke, die auf der dem Schraubendreher zugewandten Seite geringfügig gespreizt sind. Beim Einschrauben der Stiftschraube in das Gegengewinde des Kipphebels werden diese Gewindeteile zusammengedrückt und sichern die Stiftschraube selbsthemmend im Innengewinde des Kipphebels. Das geschlossene freie Ende der Stiftschraube dient der Einstellung des Ventilspiels.

Eine selbstsperrende Madenschraube ähnlichen Aufbaus ist aus US-A-19 40 878 bekannt. Dort erstreckt sich die achsparallele Schlitzung über die gesamte Gewindelänge. Die beiden Gewindeteile sind durch ein elastisches Verbindungsstück, auf der dem Schraubendreher abgewandten Seite miteinander verbunden. Auch hier werden die anfänglich geringfügig gespreizten Gewindeteile selbsthemmend im Innengewinde eines Trägers gehalten, wobei das Verbindungsstück mit einem Ansatz gegen die Oberfläche einer im Träger gehaltenen Welle drückt und diese wegen Verdrehung sichert.

Bei einer weiteren Ausführungsform dieser bekannten geschlitzten Einstellschraube ist diese von beiden Stirnseiten her geschlitzt, aber nur auf der dem Schraubendreher zugewandten Seite geringfügig gespreizt. In Höhe der Mitte der Schraube sind beide Gewindehälften durch ein elastisches Verbindungsstück miteinander verbunden. Die Schlitzung des freien Gewindeendes soll die Elastizität des Verbindungsstücks erhöhen.

Schließlich zeigt GB-A-110 998 eine von ihrem freien Ende her geschlitzte Holzschraube, deren Schenkel wiederum vor dem Einschrauben geringfügig gespreizt sind und beim Einschrauben in das Holz zusammengedrückt werden. Die elastische Spreizung der beiden Gewindeschenkel sorgt dafür, daß auch beim späteren Trocknen des Holzes die Schraube fest im selbstgeschnittenen Gegengewinde sitzt und sich nicht lockert.

Ausgehend von dem obenerwähnten aus DE-A 31 50 656 bekannten Stand der Technik liegt der vorliegenden Erfindung im Hinblick auf das eingangs anhand der EP-B-0 039 000 geschilderte Problem die Aufgabe zugrunde, eine Einstellschraube so auszubilden, daß das von ihr auf das Gegengewinde übertragene Drehmoment unabhängig von der Einschraubtiefe konstant bleibt. Diese Aufgabe wird gelöst durch die kennzeichnenden Merkmale des Anspruchs 1.

Zwei Ausführungsbeispiele sind in den Figuren 2 bis 4 dargestellt. Dabei zeigt:
- Figur 2: eine erste Ausführungsform von der Seite gesehen und
- Figur 3: im Schnitt; während
- Figur 4: eine zweite Ausführungsform im Schnitt wiedergibt.

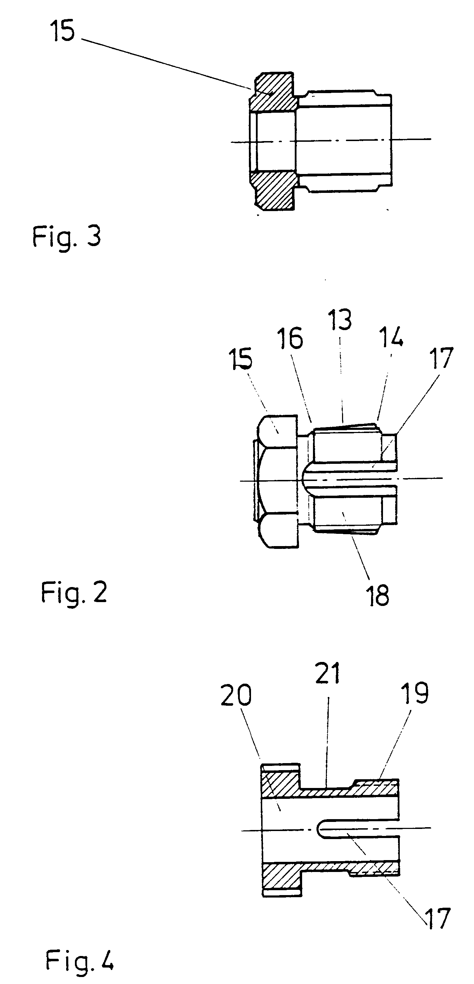

Bei der Ausführungsform nach den Figuren 2 und 3 ist der Gewindeteil 13 der Einstellschraube konisch ausgebildet und zwar derart, daß er am freien Ende 14 geringfügig größer ist als an dem dem Schraubenkopf 15 benachbarten Ende 16. Der Durchmesserunterschied ist aus Gründen der Deutlichkeit übertrieben dargestellt. Bei einer Schraube von beispielsweise 9mm Länge beträgt der Enddurchmesser am freien Ende 14 beispielsweise 6,4 mm und am anderen Ende 16 nur 6,1 mm. Mit Hilfe eines oder mehrerer Längsschlitze 17 ist der Gewindeteil 18 der Schraube in wenigstens zwei Teilstücke gabelförmig unterteilt, wodurch diese Teilstücke eine gewisse Elastizität erhalten und beim Einschrauben der Einstellschraube 11 in das Gewinde der Buchse 6 elastisch verformt werden. Dies führt dazu, daß das von der Einstellschraube 11 auf das Innengewinde der Buchse 6 ausgeübte Drehmoment sich kaum ändert, wenn die Schraube 11 tiefer in das Gewinde eingeschraubt wird. Damit verhindert man, daß bei einer Einstellung der Schraube 11 die Buchse 6 mitgedreht wird. Auf diese Weise gelingt es, beide Einstellungen jeweils einhändig vorzunehmen, ohne daß beim Einstellen der Schraube 11 die Schraube 6 mit einem zweiten Werkzeug festgehalten werden muß.

Konische Schrauben sind insbesondere mit selbstschneidendem Gewinde an sich bekannt. Dabei verläuft jedoch die Konizität in entgegengesetzter Richtung, d.h. der Durchmesser ist am freien Ende geringer als an dem dem Schraubenkopf benachbarten Ende.

Bei der Ausführungsform nach Figur 4 erstreckt sich das Gewinde 19 nur über einen Teil der Schraubenlänge, wodurch man ebenfalls eine Zunahme des übertragenen Drehmoments beim Einschrauben der Schraube 20 in das Gegengewinde der Buchse 6 verhindert. Die Ausführungsform nach den Figuren 2 und 3 ist jedoch günstiger, weil hier die Schraube ständig mit ihrer gesamten Länge im Gegengewinde anliegt und deshalb eine bessere Stabilität gegen seitliches Auslenken gegeben ist. Zumindest der Gewindeteil der Einstellschraube besteht aus einem elastisch verformbaren Werkstoff, vorzugsweise Kunststoff. Dabei ist der Querschnitt so gewählt, daß im Bereich des Schraubenkopfes keine Verformung auftritt, jedoch die den Gewindeteil tragenden Teilstücke oder Backen geringfügig verformbar sind.

Es ist offensichtlich, daß die Einstellschraube gemäß der Erfindung nicht nur wie eingangs beschrieben bei Druckreglern sondern auch in zahlreichen anderen Geräten und für die unterschiedlichsten Zwecke mit Vorteil eingesetzt werden kann.

## Patentansprüche

1. In einem Gewinde verstellbare Einstellschraube, deren Gewindeteil (13) durch achsparallele Schlitzung (17) gabelförmig in wenigstens zwei Teilstücke unterteilt ist, **dadurch** **gekennzeichnet**, daß die Einstellschraube (11) im achsialer Richtung durchgehend hohl und der Außendurchmesser des Gewindes am freien Ende (14) des Gewindeteils (13) geringfügig größer ist als an dem dem Schraubenkopf (15) benachbarten Gewindeteil (16).

2. Einstellschraube nach Anspruch 1, **dadurch** **gekennzeichnet**, daß der dem Schraubenkopf (15) benachbarte Teil (21) der Schraube gegenüber dem Endteil (19) im Durchmesser abgesetzt und zumindest teilweise gewindefrei ist.

3. Einstellschraube nach Anspruch 1, **dadurch** **gekennzeichnet**, daß der Gewindeteil (13) konisch gestaltet ist.

4. Einstellschraube nach einem der Ansprüche 1 bis 3, **dadurch gekennzeichnet**, daß der Gewindeteil (13, 19) aus einem elastisch verformbaren Werkstoff, vorzugsweise aus Kunststoff besteht.

5. Einstellschraube nach einem der Ansprüche 1 bis 4, **dadurch gekennzeichnet**, daß sie im Innengewinde einer Einstellbuchse (6) verstellbar ist.

## Claims

1. Adjusting screw adjustable within a thread and having a thread portion (13), which by axial slots (17) is divided into at least two portions, **characterized in that** the adjusting screw (11) is throughout hollow in axial direction, and the outer diameter of the thread at the free end (14) of the thread portion (13) is slightly larger than at the thread portion adjacent the head (15) of the screw.

2. Adjusting screw according to claim 1, **characterized in that** the portion (21) of the screw adjacent to the head (15) of the screw is reduced with respect to its diameter in relation to the end portion (19) and at least partially has no thread.

3. Adjusting screw according to claim 1, **characterized in that** the thread portion (13) is shaped conically.

4. Adjusting screw according to one of the claims 1 to 3, **characterized in that** the thread portion (13, 19) consists of a resiliently deformable material, preferably of plastic.

5. Adjusting screw according to one of the claims 1 to 4, **characterized in that** it is adjustable within the internal thread of an adjusting sleeve (6).

## Revendications

1. Vis de réglage pouvant être déplacée dans un filetage, et dont la partie filetée (13) est divisée, à la manière d'une fourche, en au moins deux parties partielles, par une fente (17) parallèle à l'axe, caractérisée en ce que la vis de réglage (11) est creuse de part en part dans la direction axiale, et le diamètre extérieur du filetage à l'extrémité libre (14) de la partie filetée (13) est légèrement plus grand que celui de la partie filetée (16) voisine de la tête de vis (15).

2. Vis de réglage selon la revendication 1, caractérisée en ce que la partie (21) de la vis, voisine de la tête de vis (15), est réduite en diamètre par rapport à la partie d'extrémité (19) et est, au moins en partie, dépourvue de filetage.

3. Vis de réglage selon la revendication 1, caractérisée en ce que la partie filetée (13) est de configuration conique.

4. Vis de réglage selon l'une des revendications 1 à 3, caractérisée en ce que la partie filetée (13, 19) est réalisée en un matériau déformable de manière élastique, de préférence en matière plastique.

5. Vis de réglage selon l'une des revendications 1 à 4, caractérisée en ce qu'elle peut être déplacée dans le filetage intérieur d'une douille de réglage (6).
